# EUROPÄISCHE PATENTANMELDUNG

(11) **EP 0 743 551 A2**
(43) Veröffentlichungstag der Anmeldung: **20.11.1996**
(21) Anmeldenummer: 96105028.3
(22) Anmeldetag: 29.03.1996
(51) Int. Cl.: G03B 21/58

(54) **Projektionswand für einen Diaprojektor mit einem Bild und einem flachen Gehäuse**

(30) Priorität: 18.05.1995 DE 19518249
(71) Anmelder: REFLECTA GMBH FOTO FILM PROJEKTION, D-91126 Schwabach (DE)
(72) Erfinder: Büns, J. Heinrich, 91126 Schwabach-Wolkersdorf (DE)
(74) Vertreter: LOUIS, PÖHLAU, LOHRENTZ & SEGETH

(57) **Zusammenfassung**

Es wird eine Projektionswand (10) für einen Diaprojektor beschrieben, die ein Bild (16) und ein flaches Gehäuse (12) aufweist. Das flache Gehäuse (12) ist mit dem Bild (16) derart schwenkbeweglich verbunden, daß das Bild (16) um eine Schwenkachse (24) um 180° gegen das flache Gehäuse (12) in eine Projektionsstellung umklappbar ist. Das flache Gehäuse (12) und das Bild (16) sind jeweils mit einem Verlängerungselement (34, 40) versehen, das in Richtung der Schwenkachse (24) orientiert ist. Jedes Verlängerungselement (34, 40) ist zwischen einer im flachen Gehäuse (12) bzw. im Bild (16) eingezogenen Ruhestellung und einer vom flachen Gehäuse (12) bzw. vom Bild (16) auf die gleiche Seite wegstehenden federgespannten Projektionsstellung verstellbar. Im flachen Gehäuse (12) ist ein Projektionswandtuch (60) platzsparend gelagert, das in der Projektionsstellung des Bildes (16) und der Verlängerungselemente (34, 40) am flachen Gehäuse (12), am Bild (16) und an den beiden Verlängerungselementen (34, 40) festgelegt wird.

## Beschreibung

Bekannte Projektionswände für Diaprojektoren weisen den Mangel auf, daß sie einem Aufbewahrungsort entnommen und zu Diavorführungen geeignet aufgestellt werden müssen. Das alles bedingt einen erheblichen Aufwand, der als nachteilig empfunden wird. Deshalb wurde beispielsweise auch bereits eine Projektionswand für einen Diaprojektor vorgeschlagen, die in eine Stehlampe integriert ist. Eine derartige Projektionswand der zuletzt genannten Art ist aus dem DE-GM 94 00 030 bekannt.

Aus der DE 32 04 967 C2 ist eine Projektionswand mit einem einen Zierrahmen tragenden flachen Gehäuse bekannt. Im Gehäuse ist eine biegsame oder rollbare Reflexionsfläche vorgesehen. Eine Rückwand oder eine Mittelwand dient dort als Träger für eine bedruckte oder bemalte Schicht. Dabei kann es sich um eine Landkarte, ein Poster, ein Gemälde oder eine Zeichnung handeln. Eine Veränderung der Größe bzw. der Abmessungen der Projektionsfläche ist bei dieser bekannten Projektionswand jedoch nicht möglich.

Das JP-Abstract JP 6-18988 offenbart einen variablen Projektionsschirm, dessen Größe an die räumlichen Verhältnisse, in denen der Projektionsschirm zum Einsatz kommen soll, angepaßt werden kann. Zu diesem Zwecke sind dort in ihren Längsabmessungen veränderbare Rahmenelemente vorgesehen, an welchen ein elastisches Projektionstuch aufspannbar ist.

Der Erfindung liegt die Aufgabe zugrunde, eine Projektionswand für einen Diaprojektor zu schaffen, die gleichsam keinen eigenen Raumbedarf aufweist, und die in einem Raum permanent latent vorhanden ist, d. h. im Nichtgebrauchszustand nicht als Projektionswand auffällt, und die aus diesem latenten Nichtgebrauchszustand sehr einfach in eine Gebrauchs- bzw. Projektionsstellung, und umgekehrt, verstellbar ist.

Diese Aufgabe wird erfindungsgemäße durch die Merkmale des Anspruchs 1 gelöst. Bevorzugte Aus- und Weiterbildungen der erfindungsgemäßen Projektionswand sind in den Unteransprüchen gekennzeichnet.

Bei der erfindungsgemäßen Projektionswand sind die beiden Trägerelemente in der normalen Ruhe-, d. h. Bildstellung der Projektionswand im Bild, d.h. in der das Bild tragenden Fläche, bzw. im flachen Gehäuse untergebracht und die das Bild tragende Fläche vor dem flachen Gehäuse angeordnet, so daß in dieser Ruhestellung, d. h. im Bildzustand der Projektionswand, tatsächlich nur das an einer Wand eines Raumes angeordnete Bild sichtbar ist. In der Ruhestellung macht sich die Projektionswand also in keiner Weise bemerkbar. Durch das um die gemeinsame Schwenkachse um 180° gegen das flache Gehäuse verschwenkte Bild ergibt sich dann eine Verdoppelung der Bild- bzw. Flachgehäusefläche und durch das Ausfahren der Trägerelemente aus dem flachen Gehäuse und aus der ein Bild tragenden Fläche heraus ergibt sich dann die Möglichkeit, diese Doppelfläche noch einmal bspw. zu verdoppeln, so daß sich in der Projektionsstellung der erfindungsgemäßen Projektionswand z.B. eine Vervierfachung der ursprünglichen Bildfläche ergibt. Selbstverständlich muß die Projektionsfläche in der Projektionsstellung nicht der vierfachen Bildfläche entsprechen, sondern sie kann auch kleiner oder größer sein. Das ist insbesondere von der Gestaltung bzw. Dimensionierung der teleskopartigen Trägerelemente abhängig. Das flache Gehäuse dient bei der erfindungsgemäßen Projektionswand also nicht nur zur Unterbringung des einen der beiden Trägerelemente, sondern außerdem auch zur Unterbringung des Projektionstuches, das nach dem Verschwenken der das Bild tragenden Fläche um die gemeinsame Schwenkachse und dem Herausbewegen der Trägerelemente aus dem flachen Gehäuse bzw. aus der das Bild tragenden Fläche an den vier Ecken faltenfrei festgelegt wird, wobei eine Ecke durch das flache Gehäuse, eine zweite Ecke durch die das Bild tragende Fläche und die beiden anderen Ecken durch die freien Endabschnitte der beiden Trägerelemente bestimmt sind.

Nachdem sich in der Ruhestellung der erfindungsgemäßen Projektionswand das flache Gehäuse auf der Rückseite der das Bild tragenden Fläche befindet, ist es zweckmäßig, wenn das flache Gehäuse an seiner Rückwand mit mindestens einem Befestigungselement versehen ist. Bei diesem mindestens einem Befestigungselement kann es sich um ein handelsübliches Bild-Befestigungselement handeln, mit welchem ein Bild an einer Wand eines Raumes aufhängbar ist.

Zweckmäßig ist es, wenn das flache Gehäuse und die das Bild tragende Fläche einander entsprechende Grundflächenabmessungen aufweisen. Selbstverständlich ist es auch möglich, das flache Gehäuse mit einer geringfügig kleineren Grundfläche zu gestalten als die das Bild tragende Fläche, damit das flache Gehäuse in der Ruhestellung der erfindungsgemäßen Projektionswand durch die das Bild tragende Fläche vollkommen überdeckt wird und das flache Gehäuse unsichtbar bleibt.

Bei der erfindungsgemäßen Projektionswand können die Vorderseite des flachen Gehäuses und die Rückseite der das Bild tragenden Fläche mindestens annähernd gleich gestaltet sein. Diese Gestaltung kann die Färbung und/oder die Strukturierung der Vorderseite des flachen Gehäuses und der Rückseite der das Bild tragenden Fläche betreffen, so daß sich im aufgeklappten Zustand quasi eine einzige Fläche, bestehend aus der Vorderseite des flachen Gehäuses und der Rückseite der das Bild tragenden Fläche, ergibt.

Die ein Bild tragende Fläche ist mit dem flachen Gehäuse vorzugsweise mittels einer die Schwenkachse festlegenden Scharniereinrichtung umklappbar verbunden, die am Unterrand des flachen Gehäuses und der das Bild tragendan Fläche vorgesehen ist. Diese Scharniereinrichtung kann wenigstens zwei voneinander beabstandete Scharniere oder ein längeres Scharnierband aufweisen. Die Scharniereinrichtung könnte sich auch an einem Seitenrand des Bildes und des flachen Gehäuses befinden; die Anordnung der Scharniereinrichtung am Unterrand des flachen Gehäuses und der ein Bild tragenden Fläche weist jedoch den Vorteil auf, daß die Umklappung der ein Bild tragendan Fläche um die gemeinsame Scharniereinrichtung vom flachen Gehäuse weg nach unten gravitationsbedingt einfach möglich ist.

Die ein Bild tragende Fläche kann bei der erfindungsgemäßen Projektionswand einen Bilderrahmen aufweisen, der mit dem flachen Gehäuse umklappbar verbunden ist. Dieser Bilderrahmen kann dann mit einem entsprechenden Hohlraum für das zugehörige Trägerelement gestaltet sein. Damit sich im aufgeklappten Zustand durch die Vorderseite des flachen Gehäuses und die Rückseite der ein Bild tragenden Fläche eine stufenlose Ebene ergibt, ist es zweckmäßig, wenn die Tiefe des flachen Gehäuses und die Tiefe des Bilderrahmens einander entsprechen. Selbstverständlich ist auch durch passende Anordnung der Scharniereinrichtung eine ebene Fläche aus der Vorderseite des flachen Gehäuses und der Rückseite der ein Bild tragenden Fläche bei unterschiedlichen Tiefen der ein Bild tragenden Fläche und des flachen Gehäuses bildbar.

Jedes der beiden Tägerelemente kann gegeneinander verstellbare Teleskopelemente aufweisen, zwischen welchen eine Druckfeder vorgesehen ist. Die Teleskopelemente und die zugehörige Druckfeder des jeweiligen Trägerelementes sind hierbei zweckmäßigerweise derartig gestaltet, daß in der eingezogenen, verkürzten Ruhestellung des jeweiligen Trägerelementes die Druckfeder mechanisch entspannt ist. Werden die Trägerelemente aus dem flachen Gehäuse bzw. aus der ein Bild tragenden Fläche in ihre aktive Projektionsstellung herausgezogen und in dieser Position fixiert, so wird gleichzeitig durch entsprechende Ausbildung der Trägerelemente dafür Sorge getragen, daß die jeweilige Druckfeder mechanisch gespannt wird, so daß die Teleskopelemente gegeneinander federnd vorgesehen sind. Durch diese federnde Anordnung der beiden Trägerelemente ist es dann möglich, das Projektionstuch geeignet faltenfrei zu spannen. Diese faltenfreie Spannung des Projektionstuches kann dadurch unterstützt werden, daß die freien Enden der beiden Trägerelemente mittels mindestens eines zugehörigen Strebenelementes gegeneinander abstützbar sind. Dieses mindestens eine Strebenelement kann selbst ebenfalls federnd ausgebildet sein.

Das Projektionstuch kann mit umgeschlagenen Randabschnitten ausgebildet sein, die zu seiner Festlegung am flachen Gehäuse, an der umgeklappten, ein Bild tragenden Fläche und an den davon entfernten Enden der beiden Trägerelemente vorgesehen sind. Das Projektionstuch besteht vorzugsweise aus Seidenmaterial, bei dem es sich z.B. um Ballonseide handelt. Ein solches Projektionstuch kann sehr raumsparend zusammengelegt werden, so daß das zur Lagerung des Projektionstuches vorgesehene flache Gehäuse extrem flach gestaltet sein kann. Auf diese Weise macht sich das flache Gehäuse in der Ruhestellung der Projektionswand an der Rückseite der ein Bild tragenden Fläche gleichsam nicht bemerkbar.

Ein Ausführungsbeispiel der erfindungsgemäßen Projektionswand ist in der Zeichnung verkleinert dargestellt und wird nachfolgende beschrieben. Es zeigen:
- Fig. 1: die Projektionswand in der auf Bildgröße zusammengeschwenkten Ruhestellung,
- Fig. 2: einen Schnitt entlang der Schnittlinie II-II in Fig.1 durch die zusammengeschwenkte Projektionswand,
- Fig. 3: einen Schnitt entlang der Schnittlinie III-III in Fig.1 zur Verdeutlichung der Unterbringung der Trägerelemente im flachen Gehäuse und im Bilderrahmen der ein Bild tragenden Fläche, und
- Fig. 4: die Projektionswand gemäß den Figuren 1 bis 3 in der auseinandergeschwenkten und seitlich verlängerten Projektionsstellung der Projektionswand.

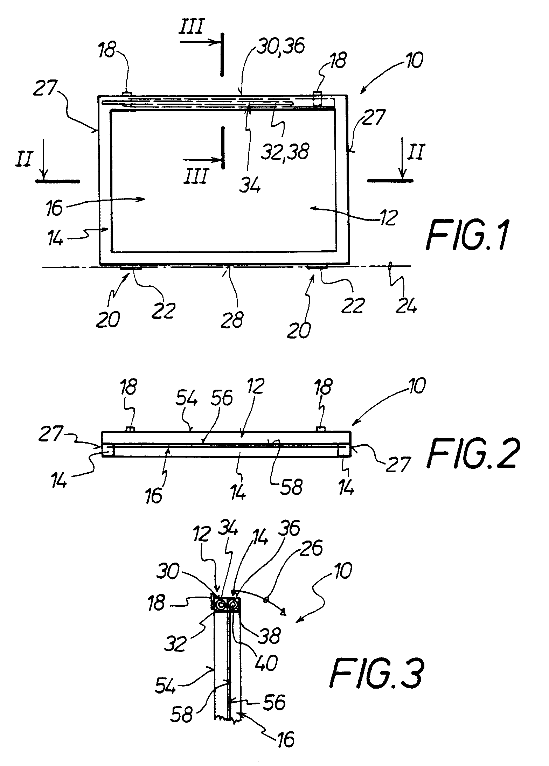

Fig. 1 zeigt eine Ausbildung der Projektionswand 10 in der auf Bildgröße reduzierten Ruhestellung, bestehend aus einem flachen Gehäuse 12 und einer einen Bilderrahmen 14 aufweisenden, ein Bild tragenden Fläche 16. In der auf Bildgröße reduzierten Ruhestellung der Projektionswand 10 befindet sich das flache Gehäuse 12 hinter der ein Bild tragenden Fläche 16, wie auch aus den Figuren 2 und 3 ersichtlich ist. Das flache Gehäuse 12 und der Bilderrahmen 14 der ein Bild tragenden Fläche 16 weisen dieselben Grundflächenabmessungen auf, so daß in der Ruhestellung der Projektionswand 10 das flache Gehäuse 12 durch die ein Bild tragenden Fläche 16 verdeckt ist. Aufgehängt wird die Projektionswand 10 an einer Wand eines Raumes mit Hilfe von am flachen Gehäuse 12 fixierten Befestigungselementen 18, wie sie an sich für Bilder vorgesehen sind.

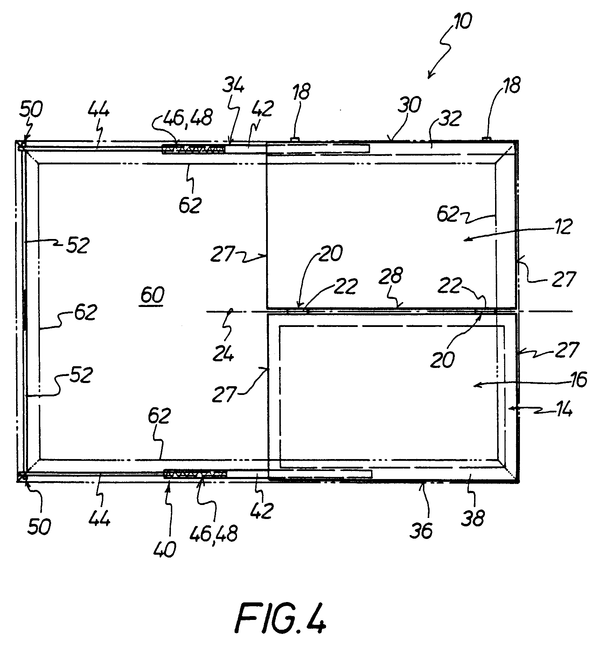

Das flache Gehäuse 12 ist mit der ein Bildtragenden Fläche 16 mittels einer Scharniereinrichtung 20 verschwenkbar, d.h. umklappbar verbunden, die zwei handelsübliche Scharniere 22 aufweist. Durch die beiden miteinander axial fluchtenden Scharniere 22 wird eine Schwenkachse 24 festgelegt, um welche die ein Bild tragende Fläche 16 gegen das flache Gehäuse 12 verschwenkbar ist. Eine solche Verschwenkung ist in Fig. 3 durch den bogenförmigen Pfeil 26 angedeutet. Die Scharniereinrichtung 20 zur Festlegung der Schwenkachse 24 kann an einer der Seitenkanten 27 vorgesehen sein. In Fig. 1 und in Fig. 4 ist eine Ausbildung der Projektionswand 10 verdeutlicht, bei welcher sich die Scharniereinrichtung 20 am Unterrand 28 des flachen Gehäuses 12 und der ein Bild tragenden Fläche 16 bzw. des Bilderrahmens 14 der ein Bild tragenden Fläche 16 befindet. Dadurch wird eine horizontal orientierte Schwenkachse 24 festgelegt.

Wie aus Fig. 1 und insbes. aus Fig. 3 ersichtlich ist, weist das flache Gehäuse 12 an seinem Oberrand 30 ein Abteil 32 auf, in welchem ein Trägerelement 34 zur Schwenkachse 24 parallel orientiert vorgesehen ist. Der Bilderrahmen 14 ist an seinem Oberrand 36 mit einem Abteil 38 ausgebildet, in welchem ein zweites Trägerelement 40 zur Schwenkachse 24 (sh. Fig.1) parallel orientiert angeordnet ist. Die beiden Trägerelemente 34 und 40 sind aus den zugehörigen Abteilen 32 und 38 seitlich herausbewegbar, wie aus Fig. 4 ersichtlich ist. In Fig. 4 sind gleiche Einzelheiten mit denselben Bezugsziffern bezeichnet wie in den Figuren 1, 2 und 3, so daß es sich in Verbindung mit Fig. 4 erübrigt, alle diese Einzelheiten noch einmal detailliert zu beschreiben. Aus Fig. 4 ist außerdem zu erkennen, daß jedes der beiden Trägerelemente 34 und 40 gegeneinander verstellbare Teleskopelemente 42 und 44 aufweist, zwischen welchen jeweils ein Federelement 46 in Gestalt einer Druckfeder 48 angeordnet ist, um das freie Ende 50 des jeweiligen Trägerelementes 34 und 40 in bezug auf das flache Gehäuse 12 bzw. den Bilderrahmen 14 der ein Bild tragenden Fläche 16 federnd auszubilden. Die freien Enden 50 der beiden Trägerelemente 34 und 40 sind bei der in Fig. 4 gezeichneten Ausbildung der Projektionswand 10, die in Fig. 4 in der Projektionsstellung gezeichnet ist, in welcher die Projektionswand 10 die vierfache Größe der ein Bild tragenden Fläche 16 bzw. des flachen Gehäuses 12 aufweist, miteinander mittels zugehöriger Strebenelemente 52 verbunden. Diese können ebenfalls teleskopartig gestaltet sein.

Die zur Befestigung der Projektionswand 10 an einer Wand eines Raumes vorgesehenen Befestigungselemente 18 sind an der Rückseite 54 des flachen Gehäuses 12 vorgesehen. Die Vorderseite 56 des flachen Gehäuses 12 und die Rückseite 58 der ein Bild tragenden Fläche 16 sind farbmäßig und/oder in ihrer Struktur mindestens annähernd ähnlich gestaltet, so daß sich im um die gemeinsame Schwenkachse 24 aufgeklappten Zustand (sh. Fig. 4) eine mindestens annähernd gleiche Fläche ergibt.

Im flachen Gehäuse 12 ist ein Projektionstuch 60 gelagert, das nach dem Umschwenken der ein Bild tragenden Fläche 16 um die Schwenkachse 24 und nach dem Herausbewegen der beiden Trägerungselemente 34 und 40 und ihrer Arretierung in der herausbewegten Projektionsstellung am flachen Gehäuse 12, an der ein Bild tragenden Fläche 16 und an den davon entfernten freien Enden 50 der beiden Trägerelemente 34 und 40 faltenfrei angeordnet und festgelegt wird. Zu diesem Zweck ist das Projektionstuch 60 zweckmäßigerweise mit nach hinten umgeschlagenen Randabschnitten 62 ausgebildet. Um ein relativ großflächiges Projektionstuch 60 problemlos in dem relativ kleinen Aufnahmevolumen des flachen Gehäuses 12 unterbringen zu können, ist es zweckmäßig, wenn das Projektionstuch 60 aus Seidenmaterial besteht. Bei diesem Seidenmaterial handelt es sich bspw. um eine Ballonseide.

## Patentansprüche

1. Projektionswand zur Auflichtprojektion mit einem flachen rechteckigen Gehäuse (12) und einer auf dessen Vorderseite ein Bild tragenden Fläche (12), die um eine an einer Seite des Gehäuses (12) angebrachten Schwenkachse (24) um 180°von dem flachen Gehäuse (12) wegklappbar ist,
mit jeweils einem Trägerelement (34, 40) in dem flachen Gehäuse (12) und der ein Bild tragenden Fläche (12), das in Richtung der Schwenkachse (24) ausziehbar ist und das zwischen einer in das flache Gehäuse (14) bzw. die ein Bild tragenden Fläche (12) eingeschobenen Ruhestellung und in einer ausgefahrenen Stellung bewegbar ist und
mit einem im flachen Gehäuse (12) gelagerten Projektionstuch (60), das zur Bildung einer Projektionswand über das flache Gehäuse (12), die seitlich um 180° weggeklappte ein Bild tragende Fläche (12) und die ausgefahrenen Trägerelemente (34, 40) spannbar ist.

2. Projektionswand nach Anspruch 1,
**dadurch gekennzeichnet,**
daß das flache Gehäuse (12) an seiner Rückseite (54) mit mindestens einem Befestigungselement (18) versehen ist.

3. Projektionswand nach Anspruch 1,
**dadurch gekennzeichnet,**
daß das flache Gehäuse (12) und die ein Bild tragende Fläche (16) einander entsprechende Grundflächenabmessungen aufweisen.

4. Projektionswand nach Anspruch 1,
**dadurch gekennzeichnet,**
daß die Vorderseite (56) des flachen Gehäuses (12) und die Rückseite (58) der ein Bild tragenden Fläche (16) mindestens annähernd gleich gestaltet sind.

5. Projektionswand nach Anspruch 1,
**dadurch gekennzeichnet,**
daß die ein Bild tragende Fläche (16) mit dem flachen Gehäuse (12) mittels einer die Schwenkachse (24) festlegenden Scharniereinrichtung (20) umklappbar verbunden ist, die am Unterrand (28) des flachen Gehäuses (12) und der ein Bild tragenden Fläche (16) vorgesehen ist.

6. Projektionswand nach einem der vorhergehenden Ansprüche,
**dadurch gekennzeichnet,**
daß die ein Bild tragende Fläche (16) einen Bilderrahmen (14) aufweist, der mit dem flachen Gehäuse (12) umklappbar verbunden ist.

7. Projektionswand nach Anspruch 1,
**dadurch gekennzeichnet,**
daß jedes der beiden Trägerelemente (34, 40) gegeneinander verstellbare Teleskopelemente (42, 44) aufweist, zwischen welchen eine Druckfeder (48) vorgesehen ist.

8. Projektionswand nach Anspruch 1 oder 7,
**dadurch gekennzeichnet,**
daß die freien Enden (50) der beiden Trägerelemente (34, 40) mittels mindestens eines zugehörigen Strebenelementes (52) gegeneinander abstützbar sind.

9. Projektionswand nach einem der vorhergehenden Ansprüche,
**dadurch gekennzeichnet,**
daß das Projektionstuch (60) mit umgeschlagenen Randabschnitten (62) ausgebildet ist, die zur Festlegung des Projektionstuches (60) am flachen Gehäuse (12), an der umgeklappten, ein Bild tragenden Fläche (16) und an den davon entfernten Enden (50) der beiden Trägerelemente (34, 40) vorgesehen sind.

10. Projektionswand nach einem der vorhergehenden Ansprüche,
**dadurch gekennzeichnet,**
daß das Projektionstuch (60) aus Seidenmaterial besteht.
